Europäisches Patentamt

European Patent Office

Office européen des brevets

(19)

(11) Publication number: **0 067 045**
**B1**

(12) **EUROPEAN PATENT SPECIFICATION**

(45) Date of publication of patent specification: 07.05.86

(51) Int. Cl.⁴: **F 28 D 7/14, B 01 D 53/26**

(21) Application number: **82302874.1**

(22) Date of filing: **03.06.82**

(54) **Heat exchanger.**

(30) Priority: **05.06.81 GB 8117336**

(43) Date of publication of application:
**15.12.82 Bulletin 82/50**

(45) Publication of the grant of the patent:
**07.05.86 Bulletin 86/19**

(84) Designated Contracting States:
**AT BE CH DE FR GB IT LI LU NL SE**

(56) References cited:
**BE-A- 535 180**
**DE-A-3 027 826**
**FR-A-2 392 708**
**US-A-3 722 583**
**US-A-4 235 081**

(73) Proprietor: **RUSSELL FINEX LIMITED**
**Russell House 9 Orange Street**
**London WC2H 7EQ (GB)**

(72) Inventor: **Parry, David Colston**
**132 Waalsebaan**
**B-1980 Tervuren (BE)**
Inventor: **Vercauteren, Francois-Theo**
**Grasbloemstraat 7**
**B-2120 Merksem (BE)**

(74) Representative: **Cross, Rupert Edward Blount**
**et al**
**BOULT, WADE & TENNANT 27 Furnival Street**
**London EC4A 1PQ (GB)**

## Description

This invention relates to a heat exchanger, and particularly to a heat exchanger for use in a gas dryer for cooling gas in order to condense moisture therefrom.

In BE—A—535180 (GB—A—764553) there is described a heat exchanger for exchanging heat between two fluids, comprising an input manifold for the supply of a first fluid to the heat exchanger, an output manifold for the output of the first fluid from the heat exchanger, and at least one generally curvate U-shape outer tube connected between the input and output manifolds for the flow therethrough of the first fluid, the or each outer tube having a plurality of inner tubes mounted therein and extending therealong for the flow therethrough of the second fluid, each manifold having a connection means for flow of the second fluid to or from the inner tubes.

This prior document is concerned with providing a strong heat exchanger with efficient sealing, this being achieved by the use of a completely welded structure, the curvate nature of the outer tube and the inner tubes therein serving solely to allow for expansion and contraction of the tubes with changes in the temperatures of the first and second fluids.

According to this invention such a heat exchanger is characterised in that the ratio of the diameter of the outer tube curve to the outer tube diameter is at least 5:1 such that the pressure drop between the input manifold and the output manifold along the or each outer tube and the inner tubes therein is very low.

The heat exchanger of this invention has the advantage that a relatively large number of inner tubes can be provided in the or each outer tube since the number of inner tubes is limited by the allowable pressure drop along the or each outer tube, which pressure drop is kept very low by the specified shape of the tubes.

Preferably the direction of flow of the second fluid in the inner tubes is opposite to that of the first fluid in the or their respective outer tube.

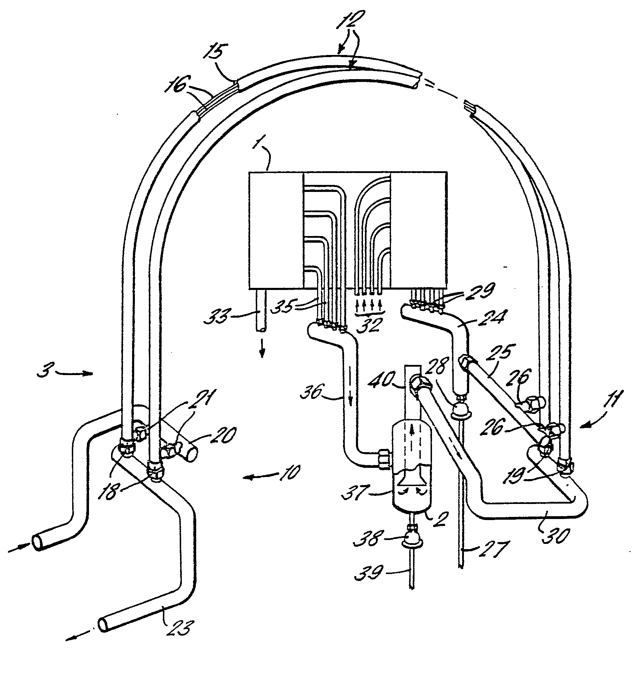

An embodiment of the invention will now be described, by way of example, with reference to the accompanying drawing, which shows in diagrammatic and partly cut-away elevation an air dryer incorporating a heat exchanger embodying the invention.

The air dryer comprises a main heat exchanger 1 for cooling the air to condense moisture therefrom, a separator 2 for separating the condensed moisture from the cooled air, and a precooler-reheater heat exchanger generally designated 3 for transferring heat from incoming air to be dried to outgoing dried air emanating from the separator 2.

The precooler-reheater 3 comprises input and output manifolds indicated generally at 10 and 11 respectively and generally U-shape heat exchanger elements 12 connected therebetween. Each element 12 consists of a continuous outer tube 15 of smooth seamless material enclosing a plurality of inner tubes 16 which are also smooth and seamless. The tubes 15 and 16 are of uniform circular cross-section. Dried air flows in the inner tubes 16 and incoming moist air flows in the reverse direction in the other tubes 15 while impinging on the exterior surface of the inner tubes 16. Thus the outgoing dried air is heated by the incoming moist air resulting in the latter being precooled before entering the main exchanger 1. In the embodiment there are two outer tubes each with only two inner tubes shown for simplicity, but there may be ten or more, typically twenty inner tubes, arranged in two circles concentric with the outer tube shell about a central inner tube. This latter arrangement gives an even distribution of inner tubes and a balanced flow around these tubes for effective heat transfer. The number of inner tubes is limited by the allowable pressure drop of moist air flowing in the outer tubes and is chosen to equalize the precooler and reheater pressure drops. There need be only one outer tube with two or more inner tubes; equally, more outer tubes can be added to increase the capacity of the precooler-reheater 3. The heat exchanger elements 12 may be horseshoe-shape or any other general U-shape with ends that do not overlap.

The input manifold 10 includes a distribution pipe 20 for the supply of compressed moist air to each tube 15 via stub pipes 21 connected to lateral apertures in the tubes 15. An outlet pipe 23 for the outlet of dried air from the dryer is also connected to the outer tubes 15 but is sealed from the interior thereof while being connected in fluid-tight communication with the inner tubes 16. This is achieved by a blanking plate soldered in a coupling insert which is itself soldered in an expanded end portion 18 of each tube 15. The tubes 16 are soldered in holes through the blanking plate.

The output manifold 11 includes a collection pipe 25 connected to stub pipes 26 which are connected in turn to lateral apertures in the tubes 15. The pipe 25 supplies the precooled moist air to the main exchanger 1 through a feed pipe 24 and distribution pipes 29, any condensate produced in the precooling process being drained off by a conduit 27 through a liquid trap 28 in which the condensate collects. An inlet pipe 30 also connected to the outer tubes 15 is in fluid-tight communication with the inner tubes 16 while being sealed from the spaces between the inner and outer tubes, by means of blanking plates soldered in end portions 19 similar to those in the end portions 18.

During assembly, overlength tubes are located in the holes in the blanking plates while the outer tubes 15 are straight. The outer tubes 15 with the inner tubes 16 are then bent to the required shape, after which the tubes 16 are soldered to the blanking plates around the holes therein and cut to length.

The air is cooled in the main exchanger 1 by a refrigerant distributed through tubes 32 and discharged through a tube 33. The cooled air flows from the exchanger 1 through pipes 35 and on through a pipe 36 into the separator 2 for separating condensed moisture from the air; the condensed moisture is drained away through a liquid trap 38 by a conduit 39. The dried air is withdrawn from the separator through a vertical tube 40 connected to the inlet pipe 30 and thereby supplied to the inner tubes 16 for reheating by the incoming moist air.

All joints between tubes 15 and pipes 21, 23, 26, 30, between pipes 24, 29 and trap 28, and between pipes 36, 35, separator 37, trap 38 and pipe 30 respectively are screw-threaded. The pipes 20, 23, 25, and 30 may have provision for additional elements 12 and pipes 21, 26 to be connected up for increasing the capacity of the heat exchanger 3.

The diameter of the U of the outer tubes 15 is large compared with the outer tube diameter; the ratio of these diameters is at least 5:1 and typically 8:1.

This comparatively large diameter of U has the great advantage of a very low pressure drop while maintaining a compact configuration. Also, this U-shape allows the exchanger elements to extend around other components of the air dryer and to one side of the main exchanger, giving an extremely compact structure. The smooth tubing also assists the low pressure drop. Baffles are often used in heat exchangers to induce turbulence in order to increase heat transfer, but such baffles greatly increase the pressure drop and are not necessary with the large radius tuurn of the U-shape.

A further advantage of the U-shape of element is that elements may be replaced without difficulty, and extra elements may be added at the manufacturing stage to increase the capacity of the heat exchanger.

The threaded joints have the advantage of allowing easy inspection, servicing and replacement of components. This feature is especially useful in allowing inspection of the brazed tube joints with the blanking plates.

## Claims

1. A heat exchanger (1), for exchanging heat between two fluids, comprising an input manifold (10) for the supply of a first fluid to the heat exchanger (1), an output manifold (11) for the output of the first fluid from the heat exchanger (1), and at least one generally curvate U-shape outer tube (15) connected between the input and output manifolds (10, 11) for the flow therethrough of the first fluid, the or each outer tube (15) having a plurality of inner tubes (16) mounted therein and extending therealong for the flow therethrough of the second fluid, each manifold (10, 11) having connection means (22, 30) for flow of the second fluid to or from the inner tubes (16) characterised in that the ratio of the diameter of the outer tube curve to the outer tube diameter is at least 5:1 such that the pressure drop between the input manifold (10) and the output manifold (11) along the or each outer tube (15) and the inner tubes (16) therein is very low.

2. A heat exchanger as claimed in Claim 1, characterised in that the direction of flow of the second fluid in the inner tubes (16) is opposite to that of the first fluid in the or their respective outer tube (15).

3. A heat exchanger as claimed in Claim 1 or Claim 2, characterised in that the or each outer tube (15) has a threaded connection to each of the manifolds (10, 11) so as to be detachably connected thereto.

## Revendications

1. Echangeur de chaleur (1) pour l'échange thermique entre deux fluides, comprenant un collecteur d'entrée (10) pour l'arrivée d'un premier fluide dans l'échangeur de chaleur (1), un collecteur de sortie (11) pour le départ du premier fluide de l'échangeur de chaleur (1) et au moins un tube externe (15) généralement recourbé en U, raccordé entre les collecteurs d'entrée et de sortie (10, 11) pour être parcouru par le premier fluide, le tube ou chaque tube externe (15) comportant plusieurs tubes internes (16) qui y sont montés intérieurement et qui s'étendent sur sa longueur pour le passage du second fluide, chaque collecteur (10, 11) étant muni de moyens de raccordement (22, 30) pour la circulation du second fluide vers et à partir des tubes internes (16), caractérisé en ce que le rapport du diamètre de la courbure du tube externe au diamètre du tube externe est au moins de 5:1, de telle manière que la chuté de pression entre le collecteur d'entrée (10) et le collecteur de sortie (11), le long du tube ou de chaque tube externe (15) et des tubes internes (16) qui y sont contenus, soit très faible.

2. Echangeur de chaleur selon la revendication 1, caractérisé en ce que le sens de passage du second fluide dans les tubes internes (16) est opposé à celui du premier fluide dans le tube externe (15) ou dans leurs tubes externes respectifs.

3. Echangeur de chaleur selon la revendication 1 ou 2, caractérisé en ce que le tube ou chaque tube externe (15) est relié par un raccord fileté à chacun des collecteurs (10, 11) de manière à être raccordé à celui-ci de façon détachable.

## Patentansprüche

1. Wärmetauscher (1) zum Austauschen von Wärme zwischen zwei Fluiden, mit einem Eingangsvertielerrohr (10) zur Zuführung eines ersten Fluids zum Wärmetauscher (1), einem Ausgangsverteilerrohr (11) zum Abführen des ersten Fluides aus dem Wärmetauscher (1) und mindestens einem im wesentlichen gekrümmt U-förmig gestalteten Außenrohr (15), welches zwischen dem Eingangs- und Ausgangsverteilerrohr (10, 11) verbunden ist für den Durchfluß des ersten Fluides dadurch, wobei das oder jedes Außenrohr (15) eine Vielzahl von Innenrohren (16) aufweist, die darin befestigt sind und sich längs des Rohres erstrecken für den Durchfluß eines zweiten Fluides, wobei jedes Verteilerrohr (10, 11) Verbindungsvorrichtungen (22, 30) aufweist für den Durchfluß des zweiten Fluides in die oder aus den inneren Rohren (16), dadurch gekennzeichnet, daß das Verhältnis des Durchmessers der Außenrohrkrümmung zum Außenrohrdurchmesser mindestens 5:1 ist, so daß der Druckabfall zwischen dem Eingangsverteilerrohr (10) und dem Ausgangsverteilerrohr (11) entlang dem oder jedem Außenrohr (15) und den Innenrohren (16) sehr klein ist.

2. Wärmetauscher nach Anspruch 1, dadurch gekennzeichnet, daß die Flußrichtung des zweiten Fluides in den inneren Rohren (16) entgegengesetzt zu der des ersten Fluides in dem oder den jeweiligen Außenrohren (15).

3. Wärmetauscher nach Anspruch 1 oder 2, dadurch gekennzeichnet, daß das oder jedes Außenrohr (15) eine Schraubverbindung zu jedem der Verteilerrohre (10, 11) aufweist, um damit lösbar verbunden zu sein.